# EUROPEAN PATENT APPLICATION

(11) **EP 2 066 089 A2**
(43) Date of publication of application: **03.06.2009**
(21) Application number: 08020577.6
(22) Date of filing: 26.11.2008
(51) Int. Cl.: H04L 27/02

(54) **Preamble generation**

(30) Priority: 28.11.2007 JP 2007307707
(71) Applicant: Toshiba TEC Kabushiki Kaisha, Tokyo 141-8664 (JP)
(72) Inventor: Shimura, Takahiro, Tokyo 141-8664 (JP)
(74) Representative: Kramer - Barske - Schmidtchen

(57) **Abstract**

There is provided a wireless communication apparatus (10) including a preamble waveform storage section (51) store preamble waveform data in which a change point between a high level and a low level has an inclination of a sine wave of a frequency associated with a modulation system in the modulation section (21) as preamble waveform data that is added to a top of the baseband signal, a preamble waveform reading section (42) read the preamble waveform data from the preamble waveform storage section (51), and a band limiting section (33) limit a band of the preamble waveform data read by the preamble waveform reading section (42), wherein the preamble waveform data subjected to band limiting by the band limiting section (33) is supplied to the modulation section (21).

## Description

The present invention relates to a wireless communication apparatus that performs wireless communication with a wireless tag by utilizing an amplitude shift keying (ASK) modulation system.

An ASK modulation system is a method of reflecting data that should be transmitted in the amplitude component of a carrier wave to perform wireless communication, and the data that should be transmitted is called a baseband signal. The data that should be transmitted is a digital signal having a high data symbol, "1", and a low data symbol, "0". As the ASK modulation system, there are a single-sideband amplitude shift keying (SSB-ASK) modulation system, a double-sideband amplitude shift keying (DSB-ASK) modulation system, a phase shift keying (PSK-ASK) modulation system, a phase reversal amplitude shift keying (PR-ASK) modulation system, and others.

A wireless communication apparatus that utilizes such ASK modulation systems to perform wireless communication with a wireless tag is disclosed in, e.g., JP-A 261984-1998 (KOKAI).

This type of wireless communication apparatus first limits a band of a baseband signal by using a digital filter. As the digital filter, a finite impulse response (FIR) filter is used, for example. Then, the wireless communication apparatus converts the band-limited baseband signal into an analog signal by using a digital-to-analog converter (DAC). Further, the wireless communication apparatus modulates the amplitude of a carrier wave by using this analog baseband signal. The signal subjected to amplitude modulation in this manner is supplied to an antenna of the wireless communication apparatus to be emitted as an electromagnetic wave. The wireless communication apparatus that has transmitted the modulated signal continues transmitting unmodulated signals.

The wireless tag includes a demodulation circuit that restores command data that is subjected to amplitude modulation and transmitted from the wireless communication apparatus. At the time of responding to the command data, back-scatter modulation is performed based on tag data. That is, a reflection amount of each unmodulated signal is changed and a back-scatter modulated wave is returned to the wireless communication apparatus. Upon receiving the back-scatter modulated wave, the wireless communication apparatus performs demodulation to read the tag data.

In recent years, wireless tags, i.e., so-called UHF band wireless tags each of which utilizes an electromagnetic wave in a frequency band 860 MHz to 960 MHz that is called a UHF band to transmit/receive data to/from a wireless communication apparatus have been developed. In such UHF band wireless tags, a wireless tag normalized as TypeC in ISO/IEC18000-6 standardized by International Organization for Standardization (ISO) is a passive-type wireless tag. The passive-type wireless tag does not have an electromotive force itself, and it is activated by performing power conversion to an electromagnetic wave from a wireless communication apparatus.

When carrying out data communication with such a passive-type wireless tag, the wireless communication apparatus must transmit an unmodulated carrier wave for activating the wireless tag before transmitting data to the wireless tag.

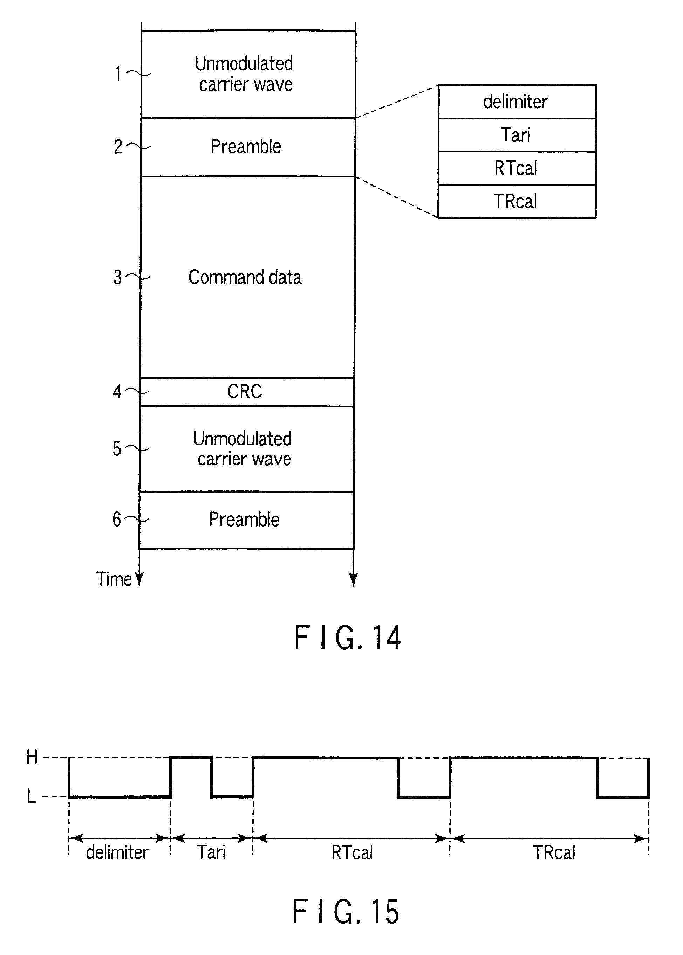

FIG. 14 shows a format of data that is transmitted from the wireless communication apparatus to the passive-type wireless tag. In the drawing, passage of time is represented from an upper side toward a lower side. First, an unmodulated carrier wave 1 is transmitted before command data. Then, a preamble signal 2 is transmitted. Subsequently, command data 3 for the wireless tag is transmitted. Then, a cycle redundancy check (CRC) code 4 is transmitted. Subsequently, an unmodulated carrier wave 5 is again transmitted.

The preamble signal 2 is formed of a data section [delimiter], a data section [Tari], a data section [RTcal], and a data section [TRcal]. The data section [delimiter] represents a border between commands. The data section [Tari] represents a data symbol "0". The data section [RTcal] represents a communication speed from the wireless communication apparatus to the wireless tag (download). The data section [TRcal] represents a communication speed from the wireless tag to the wireless communication apparatus (upload).

The passive-type wireless tag is activated with the first unmodulated carrier wave 1. Then, it recognizes a border between commands based on the preamble signal 2 and receives the command data 3. Subsequently, the wireless tag performs error check, and then carries out back-scatter modulation with the next unmodulated carrier wave 5 to return tag data.

As shown in FIG. 15, the preamble signal is produced as digital data consisting of high and low binary values. This digitized preamble signal is added to a top of the likewise digitized command data to be turned to a baseband signal. The baseband signal is subjected to amplitude modulation by the wireless communication apparatus compatible with the ASK modulation system, and then transmitted to the wireless tag.

A conventional wireless communication apparatus compatible with the ASK modulation system limits a band of a baseband signal by using a digital filter, and then converts this signal into analog data. Further, it modulates the amplitude of a carrier wave by using the band-limited analog baseband signal.

For example, when performing wireless communication with a wireless tag normalized as TypeC of ISO/IEC18000-6, a DSB-ASK modulation system and a PR-ASK modulation system are specified as the ASK modulation systems. Furthermore, an encoding system from the wireless communication apparatus to the wireless tag (download) is a pulse interval encoding (PIE) system. In the PIE system, data is encoded based on the length of a high-level period of a pulse. For example, a data symbol "0" is a pulse having a short high-level period. A data symbol "1" is a pulse having a long high-level period.

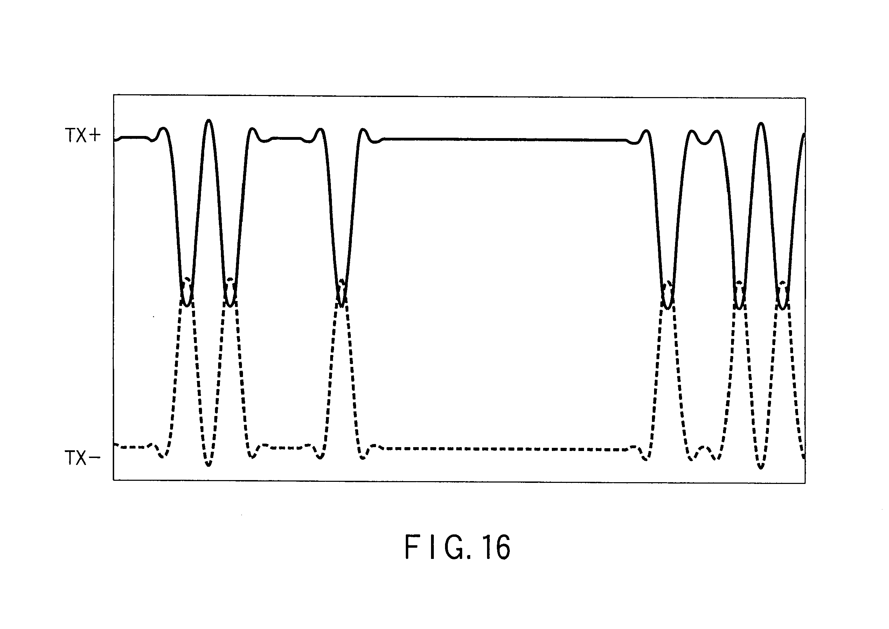

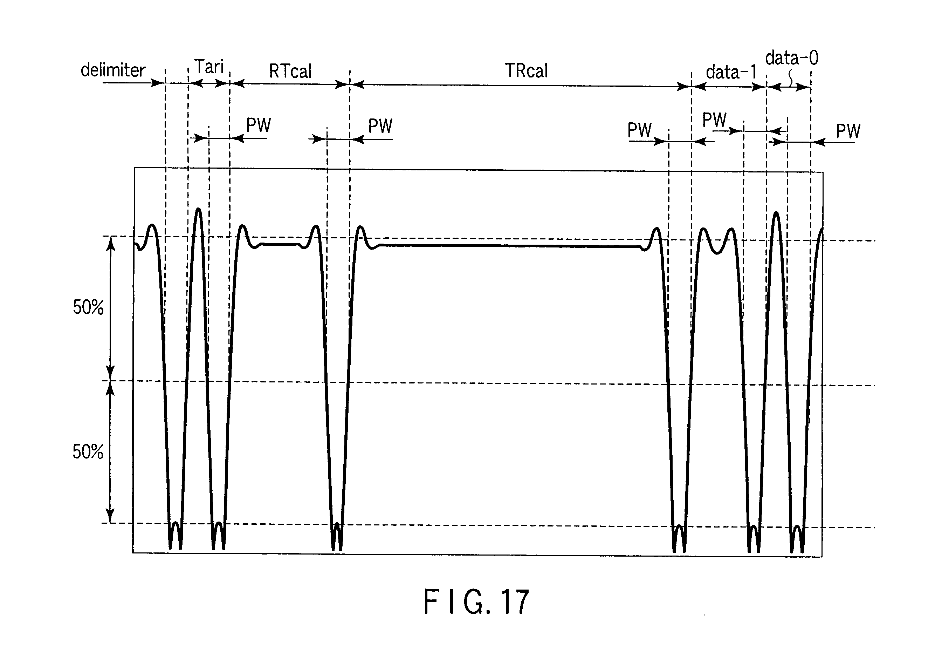

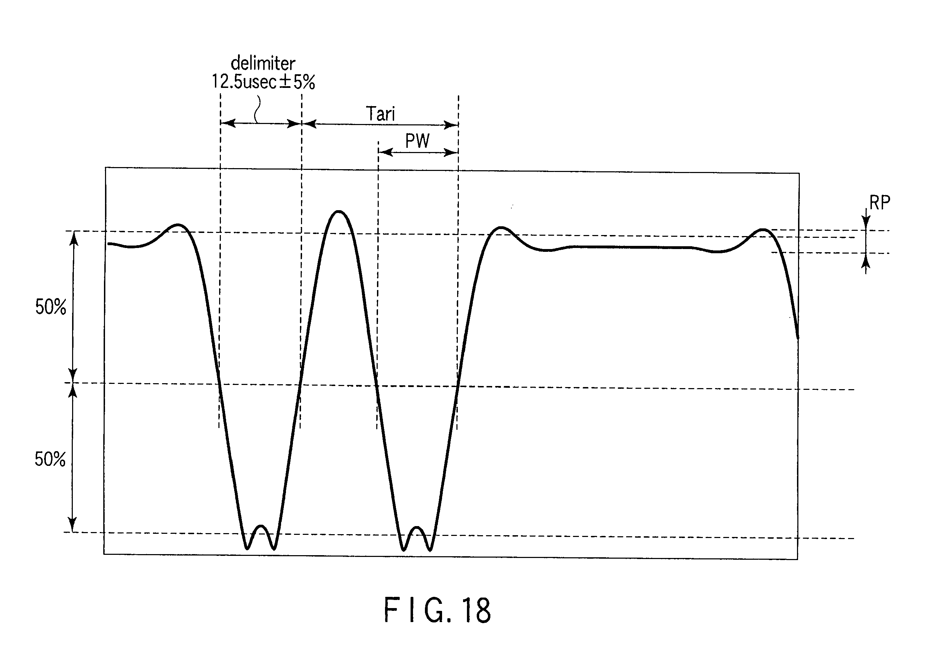

FIG. 16 shows a preamble signal part of a baseband signal after band limiting when the DSB-ASK modulation system is adopted. Furthermore, FIG. 17 shows an envelope detection waveform of a modulated wave subjected to amplitude modulation based on the DSB-ASK modulation system. Moreover, FIG. 18 is an enlarged view of a data section [delimiter] depicted in FIG. 17.

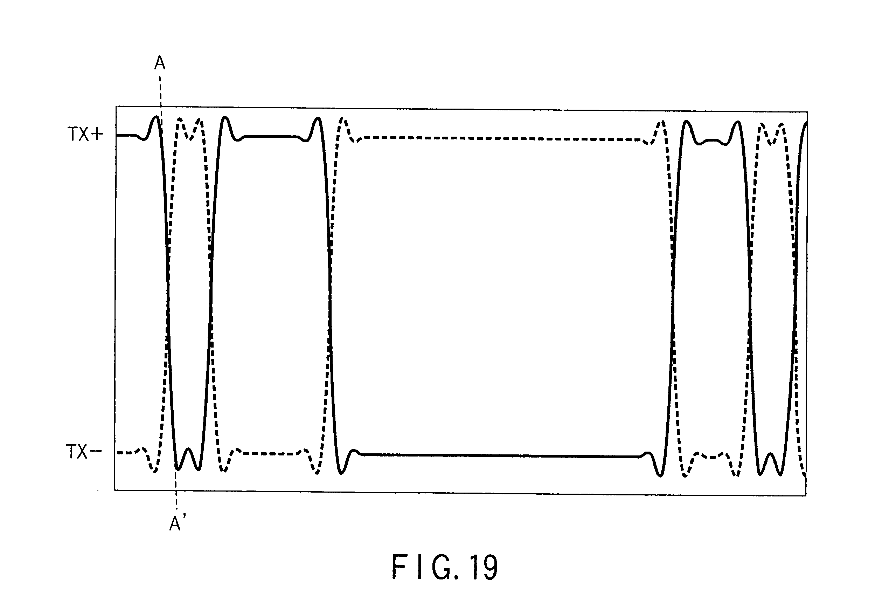

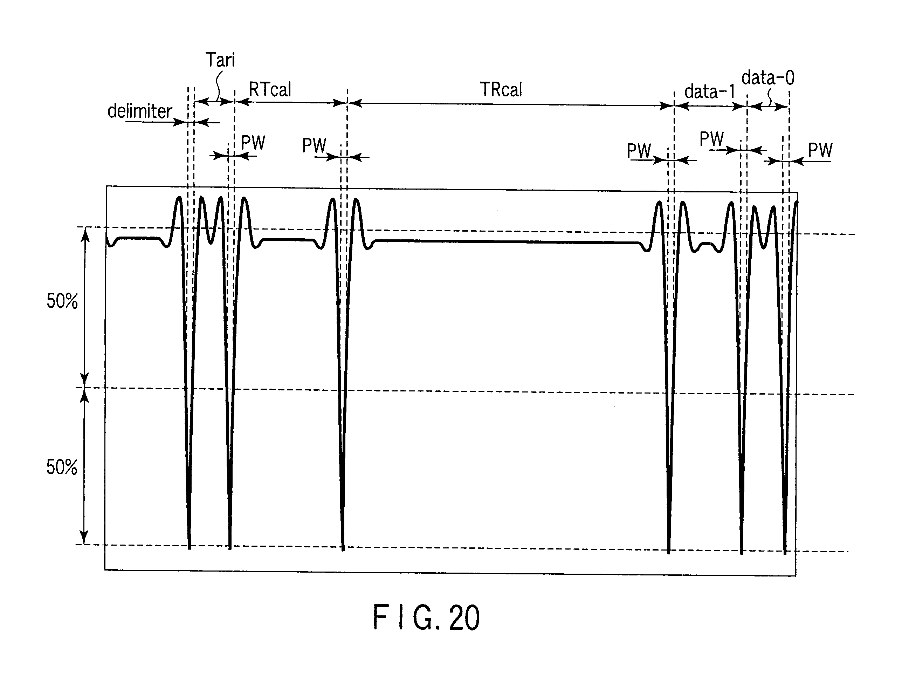

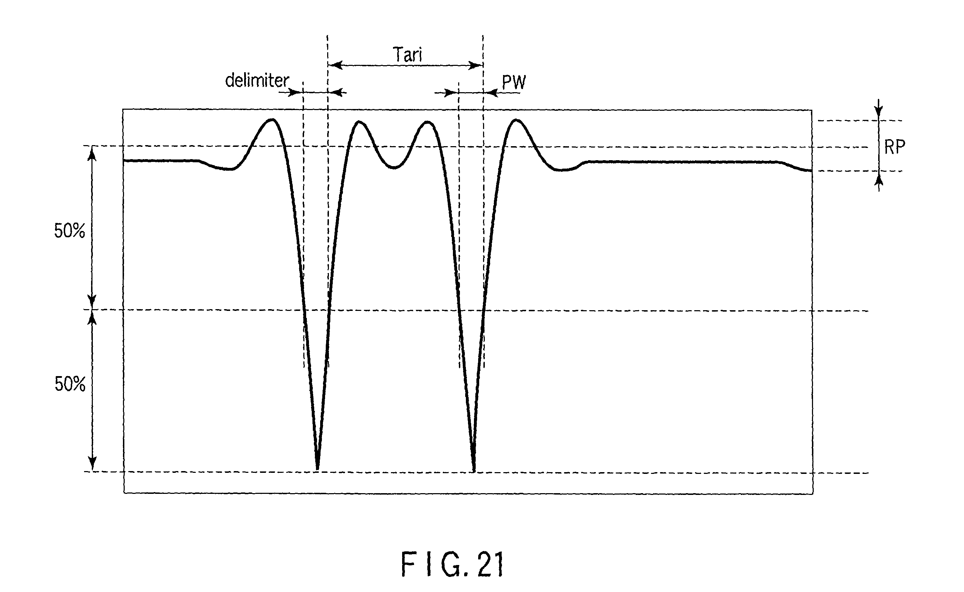

Additionally, FIG. 19 shows a preamble signal part of a baseband signal after band limiting when the PR-ASK modulation system is adopted. Further, FIG. 20 shows an envelope detection waveform of a modulated wave subjected to amplitude modulation based on the PR-ASK modulation system. Furthermore, FIG. 21 is an enlarge view of a data section [delimiter] depicted in FIG. 20.

The wireless tag recognizes respective data sections [delimiter], [Tari], [RTcal], and [TRcal] of a preamble signal and data symbols "1" and "0" of command data by demodulating a waveform depicted in FIG. 17 or FIG. 20.

When the DSB-ASK modulation system is used, the data section [delimiter] in the preamble signal has an adequate width. On the other hand, when the PR-ASK modulation system is used, a width of the data section [delimiter] is extremely smaller than the adequate width. That is because, when the baseband signal is passed through a digital filter to be subjected to band limiting, the signal based on the PR-ASK modulation system has a steep inclination A-A' depicted in FIG. 19 as compared with the signal based on the DSB-ASK modulation system.

When the width of the data section [delimiter] is narrow, the wireless tag cannot discriminate the data section [delimiter]. The wireless tag that cannot discriminate the data section [delimiter] cannot recognize start of a command. The wireless tag that cannot recognize start of a command does not respond to command data from the wireless communication apparatus.

When the PR-ASK modulation system is adopted as the ASK modulation system in this manner, the wireless communication apparatus may not possibly perform stable communication with the wireless tag.

It is an object of the present invention to provide a small and low-cost wireless communication apparatus that can stably perform communication with a wireless tag irrespective of a type of ASK modulation system.

According to an aspect of the present invention, there is provided a wireless communication apparatus (10) including a modulation section (21) configured to modulate a carrier wave by using a baseband signal and a transmitting section (14) configured to transmit a modulated signal produced by the modulation section (21) to a wireless tag, comprising: a preamble waveform storage section (51) configured to store preamble waveform data in which the change point between high and low levels has an inclination of a sine wave of a frequency associated with a modulation system in the modulation section (21) as preamble waveform data that is added to the top of the baseband signal; a preamble waveform reading section (42) configured to read the preamble waveform data from the preamble waveform storage section (51); and a band limiting section (33) configured to limit a band of the preamble waveform data read by the preamble waveform reading section (42), wherein the preamble waveform data subjected to band limiting by the band limiting section (33) is supplied to the modulation section (21).

The invention can be more fully understood from the following detailed description when taken in conjunction with the accompanying drawings, in which:
FIG. 1 is a block diagram showing an outline structure of a wireless tag reader according to an embodiment of the present invention;
FIG. 2 is a block diagram showing a primary structure of a transmission system digital signal processing section in the embodiment;
FIG. 3 is a schematic view showing a structural example of data stored in a waveform memory of the transmission system digital signal processing section in the embodiment;
FIG. 4 is a waveform chart showing a digital filter input signal when a 40-kbps/DSB-ASK modulation system is specified as an ASK modulation system in the embodiment;
FIG. 5 is a waveform chart showing a digital filter output signal when the 40-kbps/DSB-ASK modulation system is specified as the ASK modulation system in the embodiment;
FIG. 6 is a waveform chart showing a modulator output signal when the 40-kbps/DSB-ASK modulation system is specified as the ASK modulation system in the embodiment;
FIG. 7 is a waveform chart showing an envelope detection waveform of a modulated wave depicted in FIG. 6;
FIG. 8 is an enlarged view of a data section [delimiter] depicted in FIG. 7;
FIG. 9 is a waveform chart showing a digital filter input signal when a 40-kbps/PR-ASK modulation system is specified as the ASK modulation system in the embodiment;
FIG. 10 is a waveform chart showing a digital filter output signal when the 40-kbps/PR-ASK modulation system is specified as the ASK modulation system in the embodiment;
FIG. 11 is a waveform chart showing a modulator output signal when the 40-kbps/PR-ASK modulation system is specified as the ASK modulation system in the embodiment;
FIG. 12 is a waveform chart showing an envelope detection waveform of a modulated wave depicted in FIG. 11;
FIG. 13 is an enlarged view of a data section [delimiter] depicted in FIG. 12;
FIG. 14 is a schematic view showing a format of data transmitted from a wireless communication apparatus to a passive-type wireless tag;
FIG. 15 is a waveform chart of a preamble signal in a conventional example;
FIG. 16 is a waveform chart showing a preamble signal part of a baseband signal after band limiting when a DSB-ASK modulation system is adopted in a conventional example;
FIG. 17 is a waveform chart showing an envelope detection waveform of a modulated wave subjected to amplitude modulation based on the DSB-ASK modulation system in a conventional example;
FIG. 18 is an enlarged view of a data section [delimiter] in FIG. 17;
FIG. 19 is a waveform chart showing a preamble signal part of a baseband signal after band limiting when a PR-ASK modulation system is adopted in a conventional example;
FIG. 20 is a waveform chart showing an envelope detection waveform of a modulated wave subjected to amplitude modulation based on the PR-ASK modulation system in a conventional example; and
FIG. 21 is an enlarged view of a data section [delimiter] depicted in FIG. 20.

The best mode for carrying out the present invention will now be explained hereinafter with reference to the accompanying drawings.

It is to be noted that this embodiment corresponds to an example where the present invention is applied to a wireless tag reader that utilizes an ASK modulation system to read data of a wireless tag normalized as TypeC of ISO/IEC18000-6 in a non-contact manner. As the ASK modulation system, a DSB-ASK modulation system and a PR-ASK modulation system are adopted.

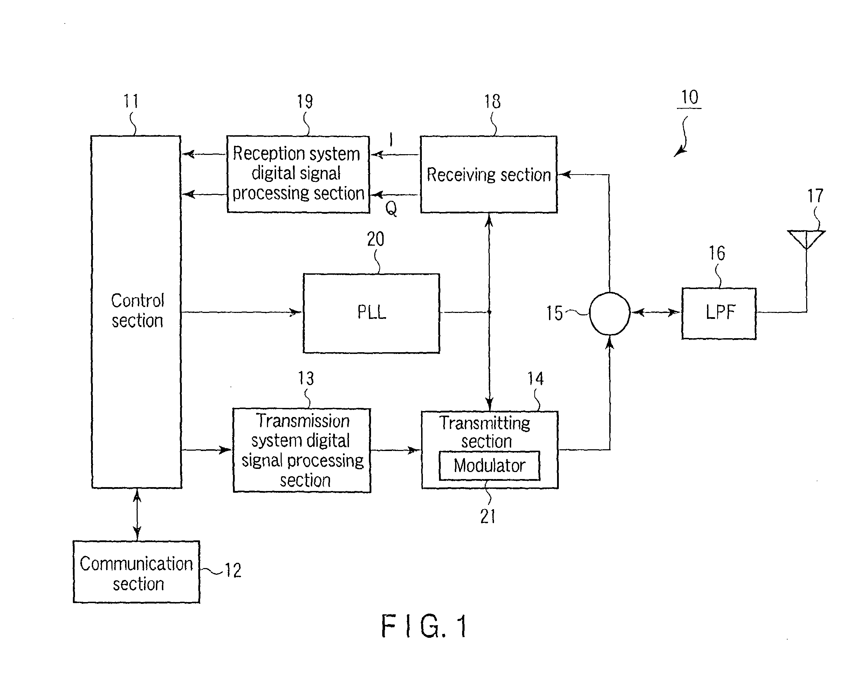

A block diagram of FIG. 1 shows an outline structure of a wireless tag reader 10 in this embodiment. The wireless tag reader 10 includes a control section 11, a communication section 12, a transmission system digital signal processing section 13, a transmitting section 14, a directional coupler 15, a low-pass filter (LPF) 16, an antenna 17, a receiving section 18, a reception system digital signal processing section 19, and a phase locked loop (PLL) section 20.

The control section 11 includes a CPU and a memory. The control section 11 connects the communication section 12, the transmission system digital signal processing section 13, the reception system digital signal processing section 19, and the PLL section 20 to control the following operations. That is, the control section 11 communicates with a higher-level device such as a personal computer through the communication unit 12. Furthermore, the control section 11 controls the PLL section 20 to output a local signal having the same frequency as a carrier wave frequency. Moreover, the control section 11 performs wireless communication wit a wireless tag (not shown) through the transmission system digital signal processing section 13 and the reception system digital signal processing section 19 to read tag data stored in a memory of this wireless tag.

The control section 11 outputs transmission data for the wireless tag to the transmission system digital signal processing section 13. The transmission system digital signal processing section 13 carries out digital signal processing with respect to this transmission data to produce a baseband signal. The baseband signal is output to the transmitting section 14. The transmitting section 14 includes a modulator 21. The modulator 21 modulates the amplitude of a carrier wave of the local signal input from the PLL section 20 by using the baseband signal input from the transmitting section 14. The amplitude-modulated signal is output to the directional coupler 15.

The directional coupler 15 is called, e.g., a circulator. The directional coupler 15 has a function of outputting a modulated signal supplied from the transmitting unit 14 to the antenna 17 via the low-pass filter 16 and a function of outputting a signal input from the antenna 17 via the low-pass filter 16 to the receiving section 18.

The antenna 17 emits an electromagnetic wave based on a modulated signal that has passed through the low-pass filter 16. Additionally, upon receiving a back-scatter modulated wave transmitted from the wireless tag, the antenna 17 outputs a reception signal based on this back-scatter modulated wave to the low-pass filter 16.

The receiving section 18 performs reception processing with respect to a reception signal at the antenna 17 which has passed through the low-pass filter 16 based on a known direct conversion system. That is, the receiving section 18 is mainly constituted of first and second mixers, first and second analog-to-digital converters (ADCs), and a 90-degree phase shifter. To the first mixer are input a reception signal and a local signal from the PLL section 20. To the second mixer are input a reception signal and a local signal whose phase is shifted 90 degrees by the 90-degree phase shifter and which is supplied from the PLL section 20.

The first mixer mixes the reception signal with the local signal. As a result, a signal I having a component that is in-phase with the local signal. The second mixer mixes the reception signal with the local signal whose phase is shifted 90 degrees. As a result, a signal Q having a component orthogonal to the local signal. The signal I produced by the first mixer is converted into a digital signal by the first ADC, and then output to the reception system digital signal processing section 19. The signal Q produced by the second mixer is converted into a digital signal by the second ADC, and then output to the reception system digital signal processing section 19.

The reception system digital signal processing section 19 has first and second demodulation sections and first and second decoding sections. The signal I converted into a digital signal is demodulated into binary values, i.e., high, "1", and low, "0", in the first demodulation section. Further, these values are decoded as data by the first decoding section and then supplied to the control section 11. The signal Q converted into a digital signal is demodulated into two values in the second demodulation section. Furthermore, these values are decoded as data by the second decoding section and then supplied to the control section 11.

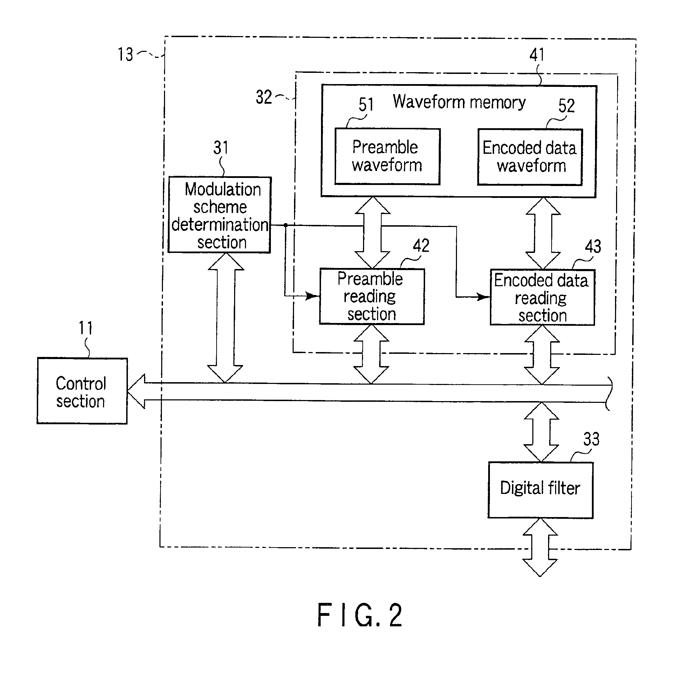

A block diagram of FIG. 2 shows a primary structure of the transmission system digital signal processing section 13. The transmission system digital signal processing section 13 includes a modulation system determination section 31, a baseband processing section 32, and a digital filter 33.

The control section 11 outputs a signal required to specify a type of amplitude modulation (e.g., a 40-kbps/DSB-ASK modulation system or a 40-kbps/PR-ASK modulation system) performed in the modulator 21 of the transmitting section 14 to the transmission system digital signal processing section 13 before transmitting data to the wireless tag.

The modulation system determination section 31 determines a type of modulation system based on the modulation system specifying signal from the control section 11. Additionally, it outputs data indicative of a result of this determination to a preamble reading section 42 and an encoded data reading section 43 in the baseband processing section 32.

The baseband processing section 32 includes a waveform memory 41, the preamble reading section 42, and the encoded data reading section 43. The waveform memory 41 has a preamble waveform storage area 51 and an encoded data waveform storage area 52. The preamble waveform storage area 51 stores preamble waveform data created in accordance with each type of modulation system. The encoded data waveform storage area 52 stores encoded waveform data created in accordance with each type of modulation system. The encoded waveform data stores waveform data corresponding to encoding of a data symbol "0" and waveform data corresponding to encoding of a data symbol "1". Each of the preamble waveform data and the encoded waveform data has an inclination of a sine wave of a frequency associated with a modulation system.

The preamble reading section 42 reads preamble waveform data corresponding to a modulation system determined by the modulation system determination section 31 from respective items of preamble waveform data stored in the preamble waveform storage area 51. The preamble reading section 42 outputs the preamble waveform data to the digital filter 33.

The encoded data reading section 43 reads encoded waveform data corresponding to a modulation system determined by the modulation system determination section 31 from respective items of encoded waveform data stored in the encoded data waveform storage area 52. At this time, when transmission data output from the control section 11 is the data symbol "0", the encoded data reading section 43 reads waveform data corresponding to encoding of the data symbol "0". When the transmission data is the data symbol "1", the encoded data reading section 43 reads waveform data corresponding to encoding of the data symbol "1". The encoded data reading section 43 outputs the encoded waveform data to the digital filter 33.

The digital filter 33 performs band limiting of the preamble waveform data and the encoded waveform data. The digital filter 33 is constituted of a low-pass filter that allows a predetermined band or a lower band to pass therethrough. In this embodiment, an FIR filter is used.

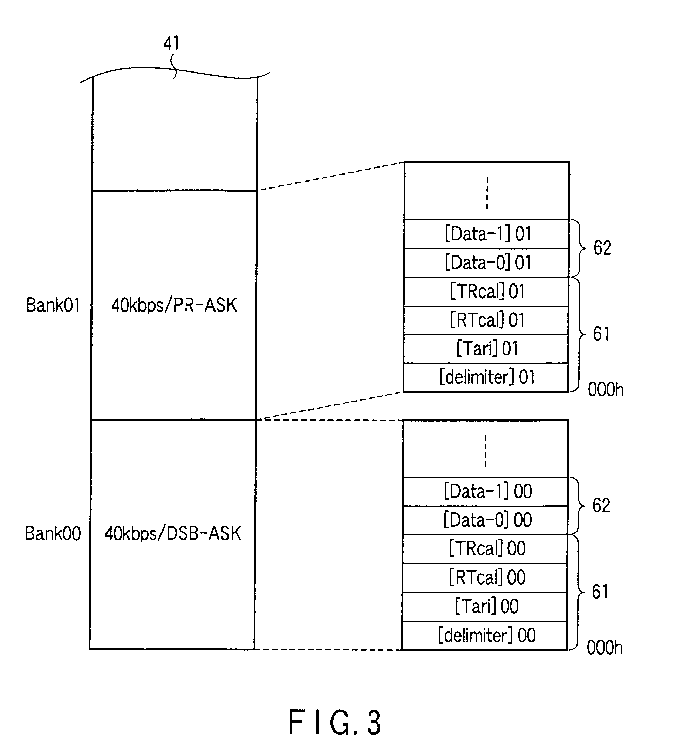

FIG. 3 shows a structural example of data stored in the waveform memory 41. The waveform memory 41 determines each of banks Bank00, Bank01, ... that is a minimum unit for memory management as one unit and assigns a type of ASK modulation system to each unit. Further, each of the banks Bank00, Bank01, ... stores preamble waveform data 61 and encoded waveform data 61 of a type assigned thereto in a common format.

Specifically, waveform data corresponding to a data section [delimiter] of a preamble signal is first stored, waveform data corresponding to a data section [Tari] is then stored, waveform data corresponding to a data section [RTcal] is stored, and waveform data corresponding to a data section [TRcal] is stored in sequence from a top address [0000h] of the respective banks Bank00, Bank01, .... Moreover, subsequently, waveform data [Data-0] corresponding to encoding of the data symbol "0" is stored, and then waveform data [Data-1] corresponding to encoding of the data symbol "1" is stored.

In the example depicted in FIG. 3, the first bank Bank00 stores preamble waveform data ([delimiter]00, [Tari]00, [RTcal]00, [TRcal]00) 61 and encoded waveform data ([Data-0]00, [Data-1]00) associated with the 40-kbps/DSK-ASK modulation system. The second bank Bank01 stores preamble waveform data ([delimited]01, [tari]01, [RTcal]01, [TRcal]01) 61 and encoded waveform data ([Data-0]01, [Data-1]01) 62 associated with the 40-kbps/PR-ASK modulation system.

It is assumed that the control section 11 outputs a signal that specifies the 40-kbps/DSB-ASK modulation system as the ASK modulation system to the transmission system digital signal processing section 13.

Then, the modulation system determination section 31 first outputs data indicating that the 40-kbps/DSB-ASK modulation system has been specified to the preamble reading section 42 and the encoded data reading section 43. The preamble reading section 42 that has received this data sequentially reads preamble waveform data ([delimiter]00, [Tari]00, [RTcal]00, [TRcal]00) 61 stored in the first bank Bank00 in the waveform memory 41. The read preamble waveform data 61 is output to the digital filter 33.

When reading the preamble waveform data 61 is completed, the encoded data reading section 43 then reads the encoded waveform data ([Data-0]00, [Data-1]00) 62 stored in the first bank Bank00 in accordance with transmission data supplied from the control section 11. When a data symbol to be transmitted is "0", the waveform data [Data-0]00 corresponding to encoding of the data symbol "0" is read. When the data symbol is "1", the waveform data [Data-1]00 corresponding to encoding of the data symbol "1" is read. The read encoded waveform data is sequentially output to the digital filter 33.

The digital filter 33 performs band limiting of the preamble waveform data and the encoded waveform data in input order. The waveform data subjected to band limiting is output to the transmitting section 14 as a baseband signal. The baseband signal is converted into an analog signal by the DAC in the transmitting section 14 and then supplied to the modulator 21. The modulator 21 modulates the amplitude of a carrier wave of a local signal input from the PLL section 20 by using this baseband signal. An ASK modulation system in this example is a system specified by the control section 11, i.e., the 40-kbps/DSB-ASK modulation system.

The signal modulated based on the 40-kbps/DSB-ASK modulation system is transmitted to the antenna 17 through the directional coupler 15 and the low-pass filter 16, and emitted as an electromagnetic wave.

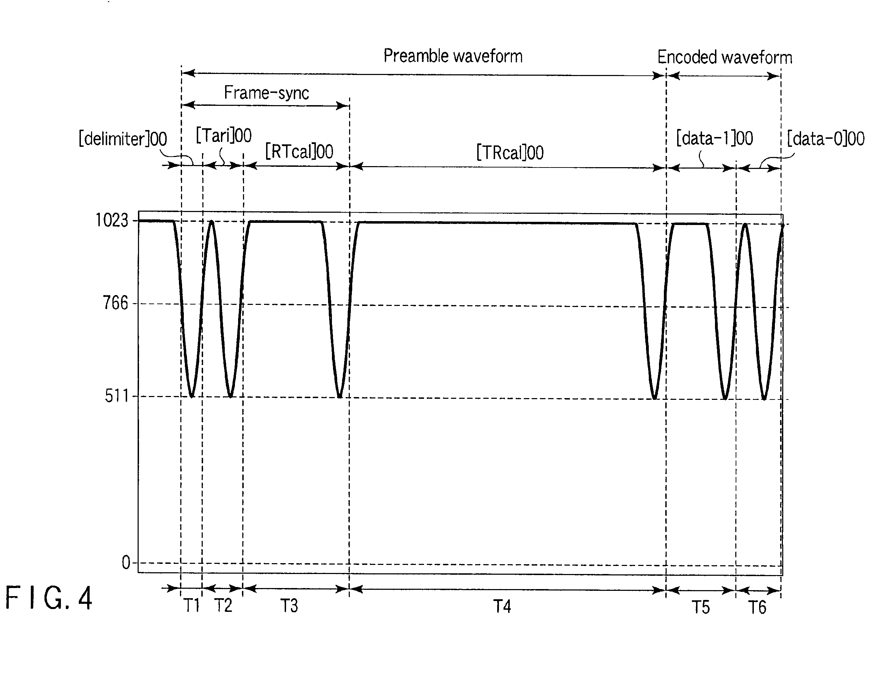

FIG. 4 shows a data waveform before input to the digital filter 33 in the above-explained example. In FIG. 4, section T1 represents waveform data [delimiter]00 corresponding to the data section [delimiter] in the preamble waveform data 61 stored in the bank Bank00. Section T2 represents waveform data [Tari]00 corresponding to the data section [Tari]. Section T3 represents waveform data [RTcal]00 corresponding to the data section [RTcal]. Section T4 represents waveform data [TRcal]00 corresponding to the data section [TRcal]. Section T5 represents waveform data [Data-1]00 corresponding to encoding of the data symbol "1" of the encoded waveform data 62 stored in the bank Bank00. Section T6 represents waveform data [Data-0]00 corresponding to encoding of the data symbol "0".

In all of these items of waveform data, the change point between high and low levels is equal to the change point of a sine wave of a frequency (20 kHz) associated with the ASK modulation system in the modulator 21, i.e., the 40-kbps/DSB-ASK modulation system.

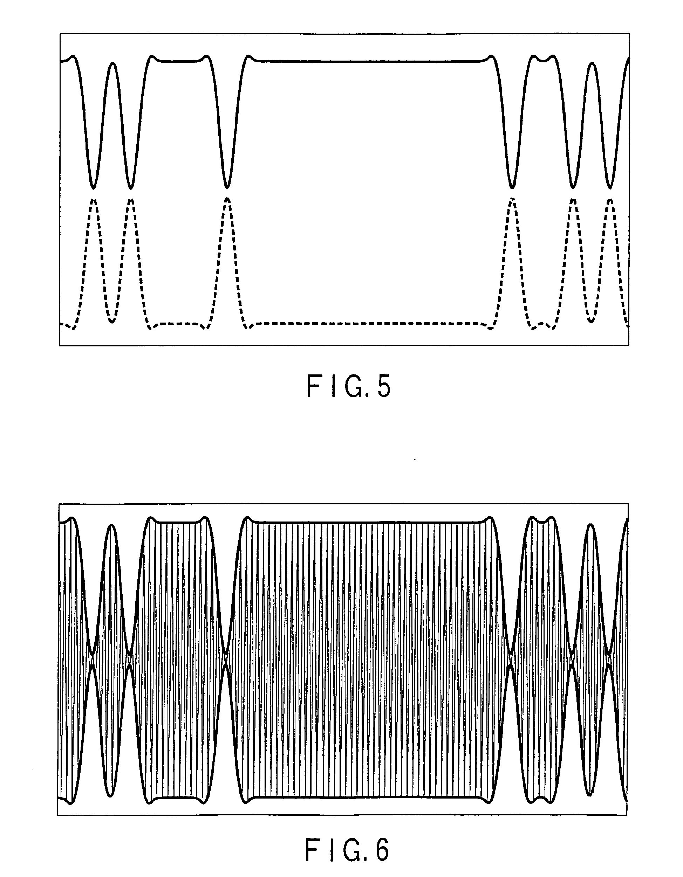

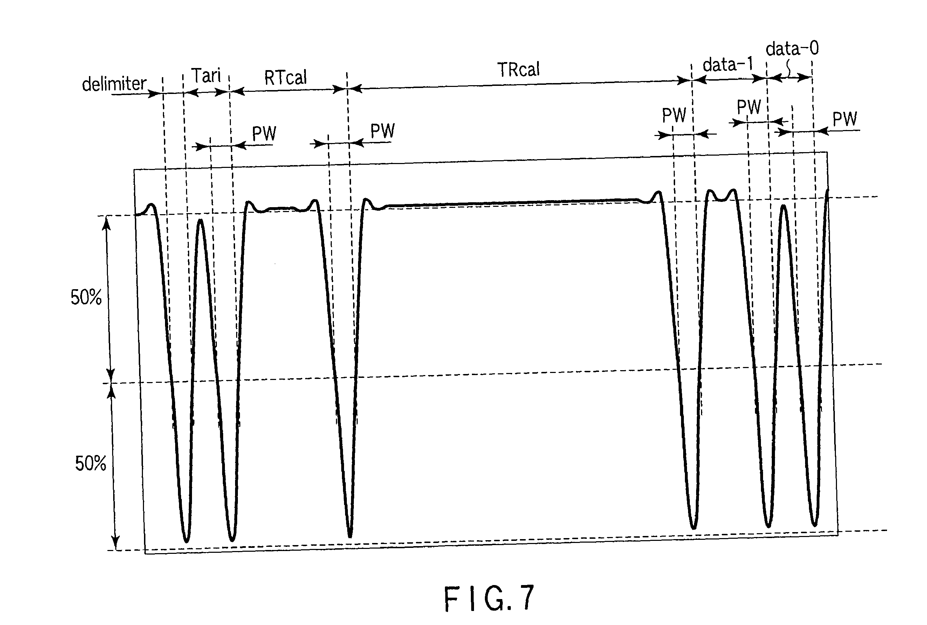

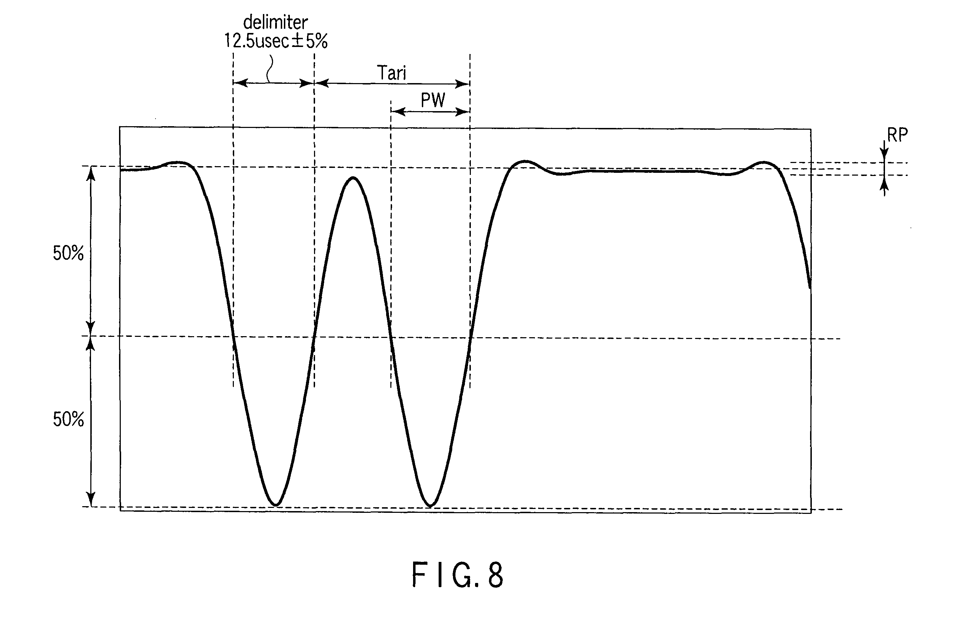

FIG. 5 shows a band-limited baseband signal after the waveform data depicted in FIG. 4 passes through the digital filter 33. Further, FIG. 6 shows an output waveform (a modulated wave) from the modulator 21 after a carrier wave of a local signal output from the PLL section 20 is modulated by using this baseband signal. Furthermore, FIG. 7 shows a waveform chart of an envelope detection waveform of this modulated wave. Moreover, FIG. 8 is an enlarged view of a data section [delimiter] depicted in FIG. 7.

As shown in FIG. 8, the data section [delimiter] in a predetermined range appears in an envelope detection waveform of a modulated wave. Therefore, the wireless tag can sufficiently recognize the data section [delimiter] indicative of a border between commands. As a result, the wireless tag reader 10 can sufficiently assure an efficiency of communication with the wireless tag when the ASK modulation system which is the 40-kbps/DSB-ASK modulation system is used.

It is assumed that the control section 11 outputs a signal specifying a 40-kbps/PR-ASK modulation system as the ASK modulation system to the transmission system digital signal processing section 13.

Then, the modulation system determination section 31 first outputs data indicating that the 40-kbps/PR-ASK modulation system is specified to the preamble reading section 42 and the encoded data reading section 43. The preamble reading section 42 that has received this data sequentially reads preamble waveform data ([delimiter]01, [Tari]01, [RTcal]01, [TRcal]01) 61 stored in the second bank Bank01 in the waveform memory 41. The read preamble waveform data 61 is output to the digital filter 33.

When reading the preamble waveform data 61 is completed, the encoded data reading section 43 then reads encoded waveform data ([data-0]01, [data-1]01) 62 stored in the second bank Bank01 in accordance with transmission data supplied from the control section 11. That is, when a data symbol to be transmitted is "0", the waveform data [Data-0]01 corresponding to encoding of the data symbol "0" is read. When the data symbol is "1", the waveform data [Data-1]01 corresponding to encoding of the data symbol "1" is read. The read encoded waveform data is sequentially output to the digital filter 33.

The digital filter 33 performs band limiting of the preamble waveform data and the encoded waveform data in input order. The band-limited waveform data is output to the transmitting section 14 as a baseband signal. The baseband signal is converted into an analog signal by the DAC in the transmitting section 14 and then supplied to the modulator 21. The modulator 21 modulates the amplitude of a carrier wave of a local signal input from the PLL section 20 by using this baseband signal. The ASK modulation system adopted in this example is a system specified by the control section 11, i.e., the 40-kbps/PR-ASK modulation system.

The signal modulated based on the 40-kbps/PR-ASK modulation system is transmitted to the antenna 17 via the directional coupler 15 and the low-pass filter 16 and emitted as an electromagnetic wave.

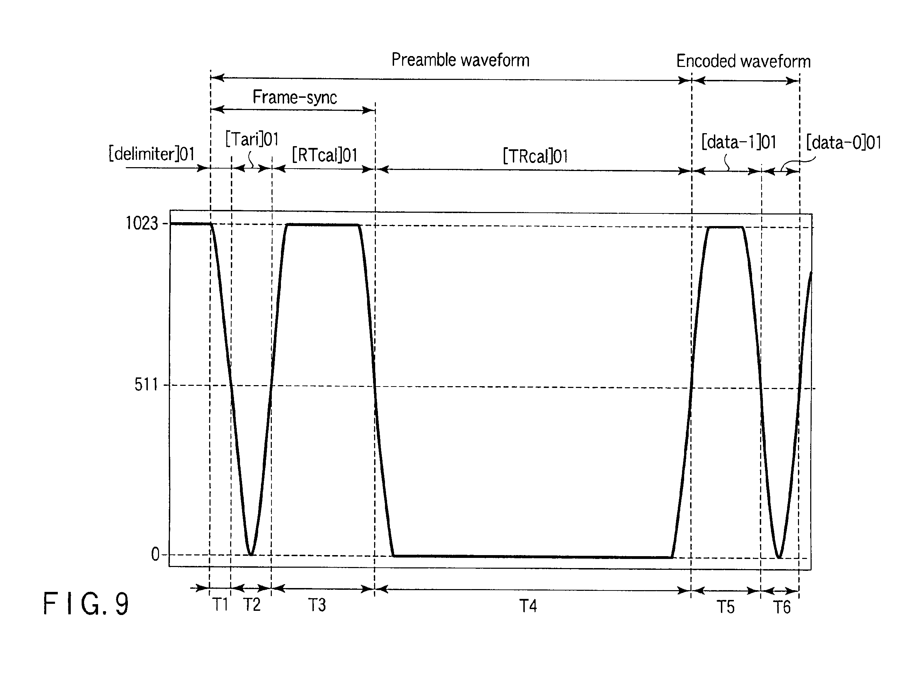

FIG. 9 shows a data waveform before input to the digital filter 33 in the above example. In FIG. 9, section T1 represents waveform data [delimiter]01 corresponding to the data section [delimiter] in the preamble waveform data 61 stored in the bank Bank01. Section T2 represents waveform data [Tari]01 corresponding to the data section [Tari]. Section T3 represents waveform data [RTcal]01 corresponding to the data section [RTcal]. Section T4 represents waveform data [TRcal]01 corresponding to the data section [TRcal]. Section T5 represents waveform data [Data-1]01 corresponding to encoding of the data symbol "1" of the encoded waveform data 62 stored in the bank Bank01. Section T6 represents waveform data [Data-0]01 corresponding to encoding of the data symbol "0".

In all of these items of waveform data, the change point between high and low levels is equal to the change point of a sine wave of a frequency (40 kHz) associated with the ASK modulation system in the modulator 21, i.e., the 40-kbps/PR-ASK modulation system.

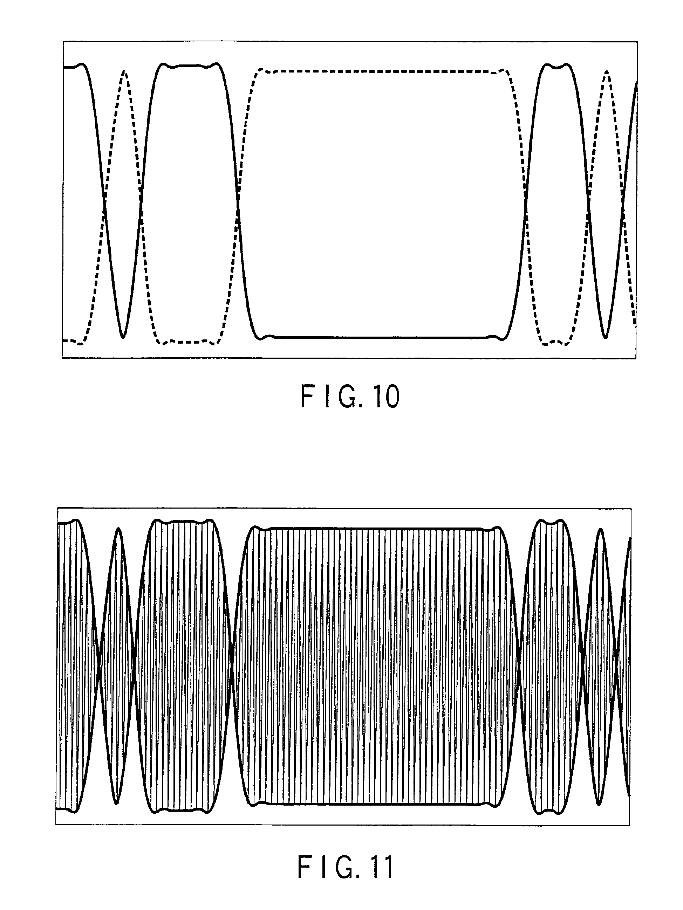

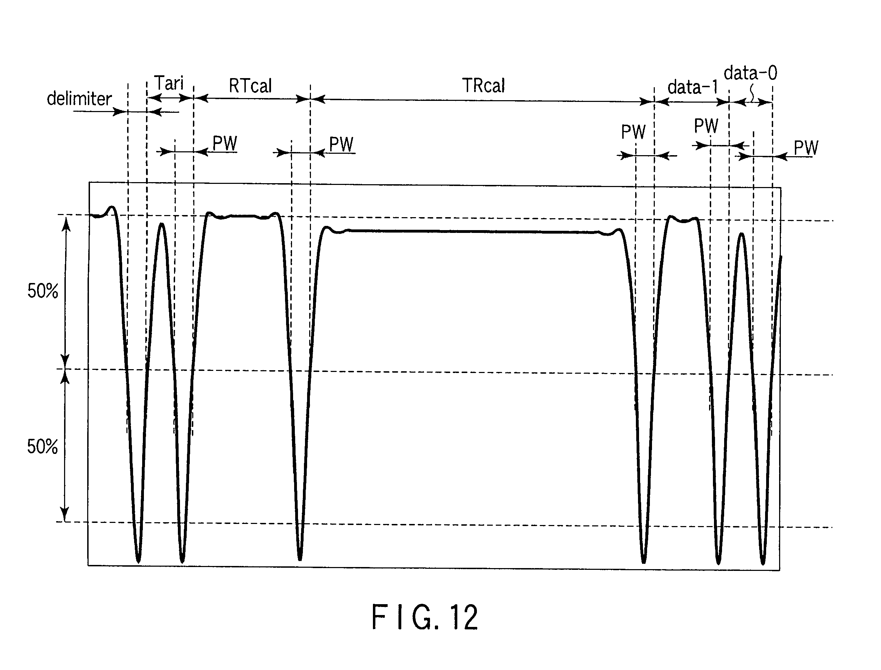

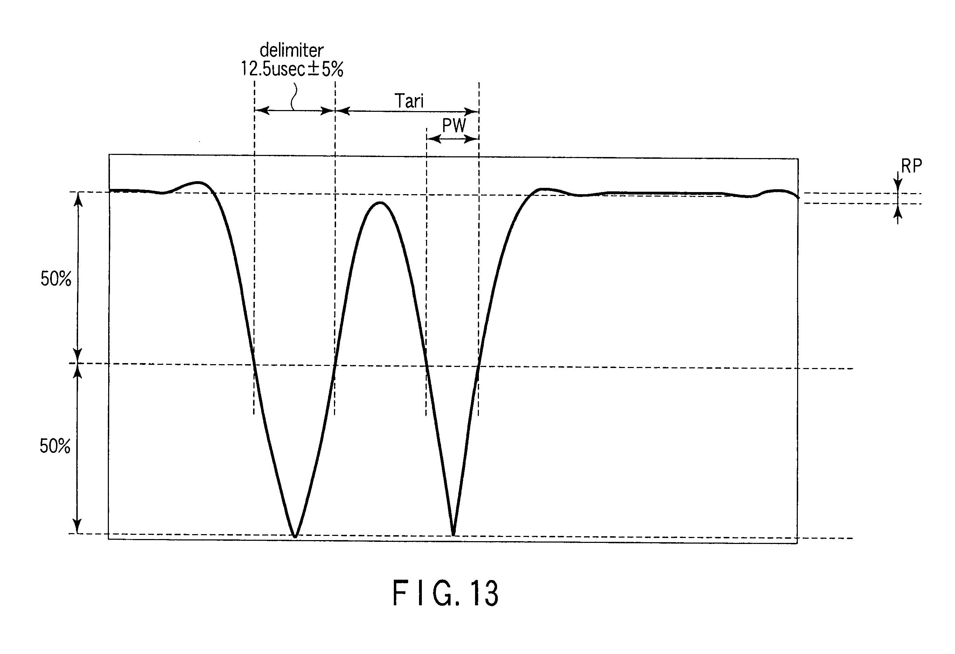

FIG. 10 shows a band-limited baseband signal after the waveform data depicted in FIG. 9 passes through the digital filter 33. Further, FIG. 11 shows an output waveform (a modulated wave) from the modulator 21 after a carrier wave of a local signal output from the PLL section 20 is modulated by using this baseband signal. Furthermore, FIG. 12 shows a waveform chart of an envelope detection waveform of this modulated wave. Moreover, FIG. 13 is an enlarged view of a data section [delimiter] depicted in FIG. 12.

As shown in FIG. 13, the data section [delimiter] in a predetermined range appears in an envelope detection waveform of a modulated wave. Therefore, the wireless tag can sufficiently recognize the data section [delimiter] indicative of a border between commands. As a result, the wireless tag reader 10 can sufficiently assure an efficiency of communication with the wireless tag when the ASK modulation system which is the 40-kbps/PR-ASK modulation system is used.

As explained above, according to this embodiment, the wireless tag reader 10 can stably perform communication with the wireless tag when the PR-ASK modulation system is adopted like a situation where the DSB-ASK modulation system is used. Additionally, in the wireless tag reader 10, it is good enough to provide only one digital filter 33 that limits a band of a baseband signal. Therefore, a size and a cost can be reduced.

Meanwhile, the wireless tag detects a maximum value and a minimum value of an envelope detection waveform and determines an intermediate value of these values as a threshold value. Further, the wireless tag measures a rising edge and a falling edge by using a clock provided therein in accordance with this threshold value to decode the data symbol "0" and the data symbol "1".

In this embodiment, as apparent from comparison between FIGS. 8 and 18, when the DSB-ASK modulation system is used, a ripple RP from the maximum value and the minimum value of the envelope detection waveform can be reduced to be smaller than that in a conventional example. Therefore, the wireless tag does not erroneously detect the intermediate value serving as the threshold value. As a result, the wireless tag does not erroneously recognize the data symbol "0" and the data symbol "1".

Likewise, as apparent from comparison between FIGS. 13 and 21, when the PR-ASK modulation system is used, the ripple RP from the maximum value to the minimum value of the envelope detection waveform is reduced. Therefore, the wireless tag does not erroneously recognize the data symbol "0" and the data symbol "1".

It is to be noted that the present invention is not restricted to the foregoing embodiment as it is, and constituent elements can be modified and carried out without departing from the scope of the invention on an embodying stage.

For example, in the foregoing embodiment, the ASK modulation system is restricted to the DSB-ASK modulation system and the PR-ASK modulation system. However, when any other ASK modulation system is used to communicate with the wireless tag, the present invention can be likewise applied.

Furthermore, the present invention may be a wireless communication apparatus compatible with the PR-ASK modulation system alone. In this case, the modulation system determination section 31 can be omitted from the transmission system digital signal processing section 13.

Additionally, in the foregoing embodiment, the preamble waveform data and the encoded waveform data are stored in the waveform memory 41 in common. However, the preamble waveform storage area 51 storing the preamble waveform data and the encoded data waveform storage area 52 storing the encoded waveform data may be formed in different memories.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A wireless communication apparatus (10) including a modulation section (21) configured to modulate a carrier wave by using a baseband signal and a transmitting section (14) configured to transmit a modulated signal produced by the modulation section (21) to a wireless tag, **characterized by** comprising:
a preamble waveform storage section (51) configured to store preamble waveform data in which a change point between a high level and a low level has an inclination of a sine wave of a frequency associated with a modulation system in the modulation section (21) as preamble waveform data that is added to a top of the baseband signal;
a preamble waveform reading section (42) configured to read the preamble waveform data from the preamble waveform storage section (51); and
a band limiting section (33) configured to limit a band of the preamble waveform data read by the preamble waveform reading section (42),
wherein the preamble waveform data subjected to band limiting by the band limiting section (33) is supplied to the modulation section (21).

2. The apparatus (10) according to claim 1, further comprising a modulation system determination section (31) configured to determine a type of modulation system in the modulation section (21), wherein the preamble waveform storage section (51) stores the preamble waveform data in accordance with each type of modulation system, and
the preamble waveform reading section (42) reads the preamble waveform data conforming to a modulation system corresponding to a type determined by the modulation system determination section (31) from the preamble waveform storage section (51).

3. The apparatus (10) according to claim 2, wherein the modulation system determined by the modulation system determination section (31) includes a phase reversal amplitude shift keying (PR-ASK) modulation system.

4. The apparatus (10) according to claim 1,
further comprising:
an encoded data waveform storage section (52) configured to store encoded waveform data in which a change point between a high level and a low level has an inclination of a sine wave of a frequency associated with a modulation system in the modulation section (21) as encoded waveform data corresponding to encoding of a data symbol; and
an encoded data waveform reading section (43) configured to read waveform data corresponding to encoding of the data symbol from the encoded data waveform storage section (52),
wherein the band limiting section (33) limits a band of the waveform data which corresponds to encoding of the data symbol and is read by the encoded data waveform reading section (43).

5. The apparatus (10) according to claim 4, further comprising a modulation system determination section (31) configured to determine a type of modulation system in the modulation section (21),
wherein the preamble waveform storage section (51) stores the preamble waveform data in accordance with each type of modulation system,
the encoded data waveform storage section (52) stores waveform data corresponding to encoding of the data symbol in accordance with each type of modulation system,
the preamble waveform reading section (42) reads preamble waveform data conforming to a modulation system corresponding to a type determined by the modulation system determination section (31) from the preamble waveform storage section (51), and
the encoded data waveform reading section (43) reads waveform data corresponding to encoding of the data symbol conforming to a modulation system corresponding to a type determined by the modulation system determination section (31) from the encoded data waveform storage section (52).

6. The apparatus (10) according to claim 5,
further comprising a waveform memory (41) configured to form the preamble waveform storage section (51) and the encoded data waveform storage section (52),
wherein a type of modulation system is assigned in accordance with each bank as a minimum unit of the waveform memory (41) to store the preamble waveform data and the waveform data corresponding to encoding of the data symbol conforming to the same modulation system in a common format.

7. The apparatus (10) according to claim 5 or 6,
wherein the modulation system determined by the modulation system determination section (31) includes a phase reversal amplitude shift keying (PR-ASK) modulation system.
